# EUROPEAN PATENT APPLICATION

(11) **EP 4 195 169 A1**
(43) Date of publication of application: **14.06.2023**
(21) Application number: 21213499.3
(22) Date of filing: 09.12.2021
(51) Int. Cl.: G07C 5/00, G07C 5/08

(54) **TRACKER DEVICE FOR ACCESSING DATA SENT BY A DONGLE CONNECTED TO A VEHICLE AND METHOD FOR SECURING THE MOVE OF SUCH DEVICE**

(71) Applicant: Nagravision S.A., 1033 Cheseaux-sur-Lausanne (CH)
(72) Inventor: HERNANDEZ, Juan-Ramon, 1033, CHESEAUX-SUR-LAUSANNE (CH)
(74) Representative: Ipside

(57) **Abstract**

It is proposed a tracker device (120) for accessing data sent by a dongle (110) connected to a vehicle (100). Such tracker device is battery (205) powered and comprises means (204) for communicating wirelessly with:
- at least one dongle (110) connected to a corresponding vehicle (100);
- a backend server (150) through a communications network (140); and
- at least one wireless device (160, 161),

Such tracker device further comprises means (206) for detecting a move of the tracker device.

## Description

### 1. FIELD OF THE DISCLOSURE

The field of the disclosure is that of the access to vehicle's data.

More specifically, the disclosure relates to an electronic tracker device configured for accessing data from vehicles and sending the data to a remote server. The disclosure also relates to a method for securing the move of such device.

The disclosure can be of interest in any field wherein accessing to vehicle's data is of interest, e.g. for anti-theft purposes or for monitoring components of a vehicle.

### 2. TECHNOLOGICAL BACKGROUND

Electronic systems for accessing to vehicle's data are known. For instance, dongles that can be connected to a vehicle, e.g. through an on board diagnostics, hereafter OBD, port of the vehicle, can communicate with an external device for providing data read from the vehicle. Such data can be for instance the status of the various vehicle sub-systems (real-time parameters, diagnostic trouble codes, engine status, etc.), e.g. following the OBD standards. Alternatively, the dongle can provide other data like the position of the vehicle in case e.g. a Global Positioning Specification, hereafter GPS, receiver is implemented in the vehicle.

However, such dongles are well-known and can be found easily in a vehicle as they connect to known ports or interfaces of the vehicle. Consequently, in case a vehicle is stolen, a thief can find the dongle without much efforts and remove it from the vehicle. In that case, there is no more possibility to get information about the vehicle.

There is thus a need for a solution for securing the access to the data of a vehicle and that such solution provides a protection against potential thefts of the vehicle.

### 3. SUMMARY

A particular aspect of the present disclosure relates to a tracker device for accessing data sent by a dongle connected to a vehicle. Such device is battery powered and comprises means for communicating wirelessly with:
- at least one dongle connected to a corresponding vehicle;
- a backend server through a communications network; and
- at least one wireless device.
Such device further comprises means for detecting a move of the tracker device.

Thus, the present disclosure proposes a new and inventive solution for accessing to data sent by a dongle connected to a vehicle, e.g. connected to an OBD port of the vehicle or connected to a Controller Area Network, or CAN, bus of the vehicle. Such data may comprise e.g. the vehicle identification number (also known as "chassis number" or "frame number") as defined e.g. in the International Organization for Standardization, hereafter ISO, standards 3779 and 4030 or information about the status of the various vehicle sub-systems (real-time parameters, diagnostic trouble codes, engine status, etc.) following the OBD standards.

More particularly, a tracker device according to the present disclosure is battery powered and communicates wirelessly with the backend server for providing the accessed data. As such there is thus no need for an electrical wired connection with the vehicle and the device can be easily hidden in the vehicle. This secures the access to information relating to the vehicle, e.g. in case of theft.

The tracker device also comprises means for communicating wirelessly with a wireless device (e.g. a beacon tag, a smartphone, a tablet equipped with a wireless transceiver, etc.). Accordingly, the tracker device is able to detect the presence of the wireless device. In addition, the tracker device comprises means for detecting its own moves. For instance, a detection of such move of the tracker device while the presence of a wireless device is not detected may be interpreted as a theft of the vehicle the tracker device is implemented in, e.g. when such wireless device is expected to be carried by the driver of the vehicle.

In some embodiments, the means for communicating wirelessly comprise a short-range communications transceiver for communicating with said at least one wireless device.

It can be e.g. a Bluetooth or a Bluetooth Low Energy transceiver, a Zigbee transceiver, an UWB transceiver, etc.

In some embodiments, the means for communicating wirelessly comprise a long-range communications transceiver for communicating with the backend server.

It may be a transceiver according to a cellular network standard, e.g. a Third Generation Partnership Project, hereafter 3GPP, 2G, 3G, 4G or 5G cellular network.

In some embodiments, the means for detecting a move of the tracker device comprise an accelerometer or a Global Navigation Satellite System receiver.

The Global Navigation Satellite System receiver may be e.g. a Global Positioning Specification, hereafter GPS, a Galileo, a Glonass or a Beidou receiver.

In some embodiments, the tracker device (according to any of the embodiments disclosed above) is implemented in a vehicle. The means for communicating wirelessly are configured for communicating with a dongle connected to the vehicle.

In some embodiments, the tracker device is not electrically wired connected to the vehicle.

Thus, the tracker device can be implemented in the vehicle in a hidden place so that it cannot be found easily e.g. in case the vehicle is stollen.

Another aspect of the present disclosure relates to a vehicle comprising a tracker device (according to any of the embodiments disclosed above). The tracker device is not electrically wired connected to the vehicle.

Another aspect of the present disclosure relates to a method for securing the move of a tracker device as disclosed above (according to any of the embodiments disclosed above). According to such method, the tracker device executes:
- detecting a move of the tracker device;
- responsive to the detecting a move, scanning for at least one wireless message sent by a wireless device; and
- if a wireless message is not received before the expiration of a predetermined time duration after the start of the scanning, generating an alert information and sending, to the backend server, a wireless message carrying the alert information.

Thus, when no wireless device is detected while the tracker is moving, an alert is raised to the backend server. The absence of such wireless device while the tracker device is moving may indeed be interpreted as an on-going theft of the vehicle the tracker device is implemented in, e.g. when the wireless device is expected to be carried by the driver of the vehicle.

In some embodiments, the tracker device executes pairing with a wireless device. During the scanning responsive to the detecting a move, the tracker device scans for at least one wireless message sent by the wireless device it has been paired with. If a wireless message sent by the wireless device the tracker device has been paired with is not received before the expiration of a predetermined time duration after the start of the scanning, the tracker device executes the sending, to the backend server, a wireless message carrying an alert information.

Thus, the tracker device is paired with a trusted wireless device, e.g. the wireless device of a person allowed to drive the vehicle.

In some embodiments, the pairing comprises:
- receiving a request, sent by the backend server, for initiating a discovery procedure;
- responsive to the receiving the request, scanning for an advertisement message sent by the wireless device and receiving an advertisement message sent by the wireless device;
- sending, to the backend server, a message indicative of the detection of the wireless device;
- receiving a request, sent by the backend server, for pairing with the wireless device.

In some embodiments, the at least one wireless message sent by the wireless device the tracker device has been paired with is an advertisement message.

In some embodiments, the pairing comprises:
- broadcasting a discovery message in destination to the at least one wireless device;
- receiving a request, sent by the backend server, for pairing with a wireless device that received the broadcasted discovery message.

In some embodiments, the pairing comprises:
- receiving a request, sent by the backend server, for initiating a discovery procedure. The broadcasting a discovery message is executed responsive to the receiving the request for initiating a discovery procedure.

In some embodiments, the pairing comprises:
- responsive to the broadcasting a discovery message, establishing a direct pairing with the wireless device that received the broadcasted discovery message according to a wireless protocol implemented by the means for communicating wirelessly with the wireless device.

In some embodiments, the request for pairing sent by the backend server comprises a unique identifier of the wireless device that received the broadcasted discovery message for allowing the tracker device to identify the wireless device.

For instance, the tracker device may store in an embedded memory the unique identifier for further identification of the wireless device.

In some embodiments, the scanning for a wireless message comprises:
- sending, to the wireless device the tracker device has been paired with, an advertisement message for having the wireless device to send back a wireless message to the tracker device.

### 4. LIST OF FIGURES

Other features and advantages of embodiments shall appear from the following description, given by way of indicative and non-exhaustive examples and from the appended drawings, of which:
- Figure 1 illustrates a tracker device implemented in a vehicle and configured for accessing data sent by a dongle connected to the vehicle according to one embodiment of the present disclosure;
- Figure 2 illustrates an example of the structural blocks that can be implemented in the tracker device of Figure 1;
- Figure 3 illustrates the steps of a method for securing the move of the tracker device of Figure 1 according to one embodiment of the present disclosure;
- Figure 3a illustrates steps implemented during the step of pairing of the method of Figure 3 according to a first embodiment of the present disclosure;
- Figure 3b illustrates steps implemented during the step of scanning a wireless message and the step of sending the wireless message of the method of Figure 3 according to said first embodiment of the present disclosure;
- Figure 3c illustrates steps implemented during the step of pairing of the method of Figure 3 according to a second embodiment of the present disclosure;
- Figure 3d illustrates steps implemented during the step of scanning a wireless message and the step of sending the wireless message of the method of Figure 3 according to said second embodiment of the present disclosure;
- Figure 3e illustrates steps implemented during the step of pairing of the method of Figure 3 according to a third embodiment of the present disclosure;
- Figure 3f illustrates steps implemented during the step of scanning a wireless message and the step of sending the wireless message of the method of Figure 3 according to said third embodiment of the present disclosure.

### 5. DETAILED DESCRIPTION

In all of the Figures of the present document, the same numerical reference signs designate similar elements and steps.

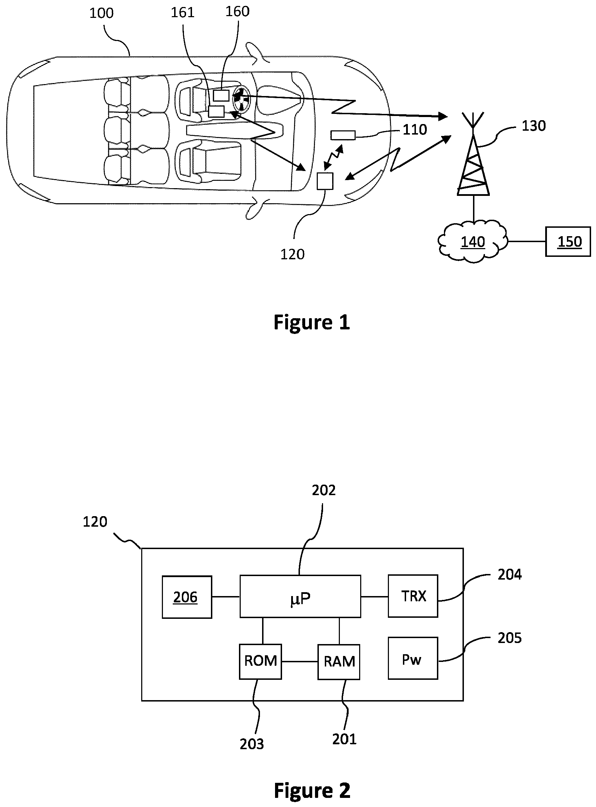

Referring now to **Figure 1****,** we describe a tracker device 120 configured for accessing data sent by a dongle 110 connected to a vehicle 100 according to one embodiment of the present disclosure. An example of the structural blocks that can be implemented in the tracker device 120 are further described in relation with **Figure 2****.**

The tracker device 120 comprises a battery 205 and is thus battery powered. The tracker device 120 further comprises means 204 for wirelessly communicating with:
- the dongle 110 connected to the vehicle 100;
- a backend server 150 through the communications network 140; and
- a first wireless device 160 and a second wireless device 161.

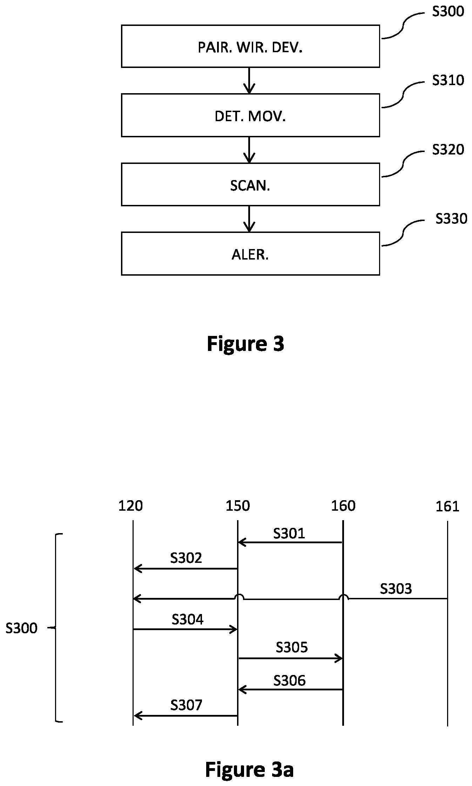

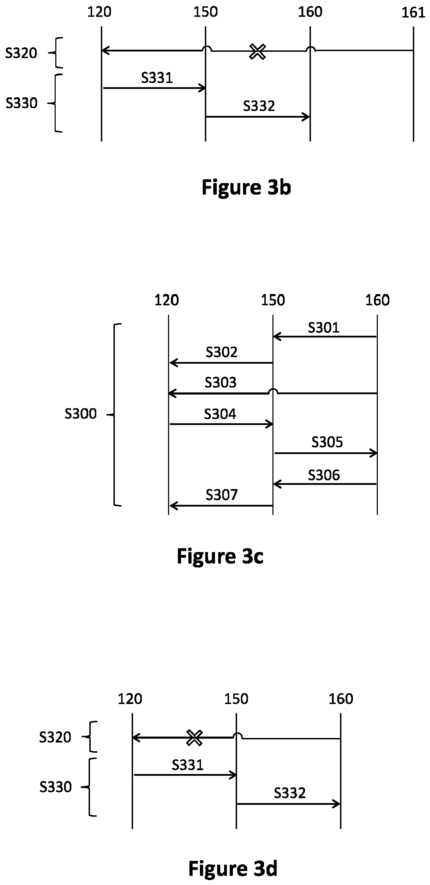

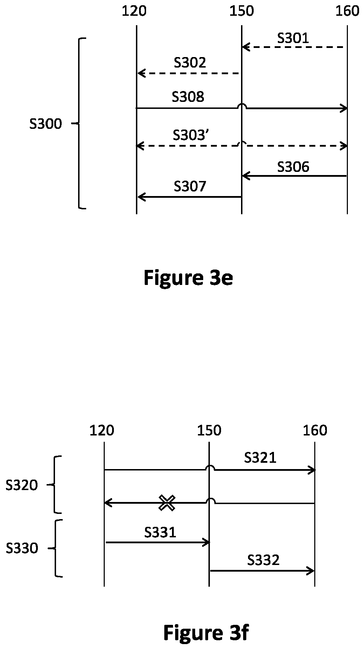

The first wireless device 160 may be a terminal equipment such as a smartphone (e.g. the smartphone of the owner of the vehicle 100), a tablet equipped with wireless transceivers, etc. The first wireless device 160 allows for instance the owner of the vehicle 100 to program the tracker device 120 as described below in relation with Figure 3.

Back to Figure 1, the second wireless device 161 is a device adapted to broadcast wireless beacon signals. It may be for instance a Bluetooth or a Bluetooth Low Energy beacon tag, a Zigbee beacon tag, an UWB beacon tag, etc. However, in other embodiments discussed below in relation with Figures 3c, 3d, 3e and 3f, such second wireless device 161 is not used for implementing the present technic. Conversely, the first wireless device 160 may be used in those embodiments as a single wireless device that implements the wireless functionalities of both the first wireless device 160 and of the second wireless device 161 of the present embodiment.

Back to Figure 1, the dongle 110 is connected to the vehicle 100 through an OBD port of the vehicle 100. However, in other embodiments, the dongle 110 is connected to another type of port or interface (through a wired or a wireless communication link) allowing to access to data of the vehicle. For instance, the dongle 110 is connected to a Controller Area Network, or CAN, bus.

The means 204 for communicating wirelessly comprise a short-range wireless communications transceiver for communicating with the dongle 110. It can be e.g. a Bluetooth transceiver or a Bluetooth Low Energy transceiver.

In some embodiments, the tracker device 120 is configured for communicating wirelessly with any dongle connected to a corresponding vehicle, and not only with the dongle 110. This holds as long as such dongle is within the range of the short-range wireless communications transceiver of the means 204 for wirelessly communicating.

Back to Figure 1, the means 204 for wirelessly communicating further comprise a transceiver according to one (or more) long-range wireless communications protocol. Such long-range wireless communications protocol may be a cellular network standard for communicating with the backend server 150 through the base station 130 and the communications network 140. It can be e.g. a Third Generation Partnership Project, hereafter 3GPP, 2G, 3G, 4G or 5G cellular network. In other embodiments, the transceiver for communicating with the backend server 150 implements another long-range wireless communications standard, e.g. a narrowband standard dedicated to the internet of things (SigFox^{®}, LoRa^{®}, etc.).

Back to Figure 1, the tracker device 120 is configured for accessing data sent by the dongle 100, e.g. the VIN of the vehicle 100 (or of the vehicles within the range of the short-range wireless communications transceiver depending on the embodiments) or information about the status of the various sub-systems of the vehicle 100 (real-time parameters, diagnostic trouble codes, engine status, etc.), e.g. following the OBD standards in corresponding implementations, and reporting it to the backend server 150. As such, the tracker device 120 allows tracking the data relating to the vehicle 100.

The means 204 for communicating wirelessly also comprise a short-range wireless communications transceiver for communicating with the first wireless device 160 and the second wireless device 161. It may be e.g. a Bluetooth transceiver or a Bluetooth Low Energy transceiver, a Zigbee transceiver, an Ultra-wideband (UWB) transceiver, etc. Depending on the implementations, the transceiver for communicating wirelessly with the first wireless device 160 and the second wireless device 161 may be the same transceiver as the transceiver for communicating with the dongle 110 discussed above, or it may be a distinct transceiver. In the same way, different short-range wireless communications transceivers implementing different protocols may be used respectively for communicating wirelessly with the first wireless device 160 and the second wireless device 161.

Back to Figure 1, as discussed above the tracker device 120 is battery powered and communicates wirelessly with the dongle 110. Consequently, the tracker device 120 is not electrically wired connected to the vehicle 100. The tracker device 120 can thus be implemented in the vehicle 100 in a hidden place so that it cannot be found easily e.g. in case the vehicle 100 is stollen. Even in such case, the data can still be accessed remotely from the vehicle 100 through the communication with the backend server 150 as long as the tracker device 120 is not discovered by the thief.

In Figure 1, the vehicle 100 is represented in the form of a car. However, the tracker device 120 can be implemented in any vehicle that comprises a port or interface wherein a dongle 110 can be implemented (e.g. a truck).

Back to Figure 1, the tracker device 120 comprises means 206 for detecting its own move. For instance, in some implementations the means 206 for detecting the move of the tracker device 120 comprise a Global Navigation Satellite System, hereafter GNSS, receiver. It can be e.g. a GPS, a Galileo, a Glonass or a Beidou receiver. In other implementations, the means 206 for detecting the move of the tracker device 120 comprise an accelerometer. The tracker device 120 can thus determine its own movement based on the information provided by the means 206 for detecting the move of the tracker device 120.

More generally, the tracker device 120 is configured for implementing some of the steps of the method for securing its own move, as described below in relation with Figures 3, 3a, 3b, 3c, 3d and 3e. Indeed, the tracker device 120 is able to detect the presence or not of the first wireless device 160 or of the second wireless device 161 based on the information received through the means 204 for communicating wirelessly. In addition, the tracker device 120 is able to detect its own move based on the information provided by the means 206 for detecting the move. Accordingly, a detection of such move of the tracker device 120 while the presence of a wireless device 160, 161 is not detected may be interpreted as a theft of the vehicle 100 the tracker device 120 is implemented in, e.g. when such wireless device 160, 161 is expected to be carried by the driver of the vehicle 100 during a normal use.

Referring to Figure 2, in order to be able to implement the method discussed below in relation with Figures 3, 3a, 3b, 3c, 3d and 3e (according to any of the embodiments disclosed below), in some embodiments the tracker device 120 also comprises:
- a non-volatile memory 203 (e.g. a read-only memory (ROM), a hard disk, a flash memory, etc.);
- a volatile memory 201 (e.g. a random-access memory or RAM) and a processor 202.

The non-volatile memory 203 is a non-transitory computer-readable carrier medium. It stores executable program code instructions, which are executed by the processor 202 in order to enable implementation of some steps of the method described below (method for securing the move of the tracker device 120) in the various embodiments disclosed below in relation with Figures 3, 3a, 3b, 3c, 3d and 3e.

Upon initialization, the aforementioned program code instructions are transferred from the non-volatile memory 203 to the volatile memory 201 so as to be executed by the processor 202. The volatile memory 201 likewise includes registers for storing the variables and parameters required for this execution.

The steps of the method for securing the move of the tracker device 120 may be implemented equally well:
- by the execution of a set of program code instructions executed by a reprogrammable computing machine such as a PC type apparatus, a DSP (digital signal processor) or a microcontroller. This program code instructions can be stored in a non-transitory computer-readable carrier medium that is detachable (for example a CD-ROM, a DVD-ROM, a USB key) or non-detachable; or
- by a dedicated machine or component, such as an FPGA (Field Programmable Gate Array), an ASIC (Application-Specific Integrated Circuit) or any dedicated hardware component.

In other words, the disclosure is not limited to a purely software-based implementation, in the form of computer program instructions, but that it may also be implemented in hardware form or any form combining a hardware portion and a software portion.

Referring now to **Figure 3****,** we describe a method for securing the move of the tracker device 120. Some steps of the method are further described below in relation with the embodiments of **Figures *3a******,*** **3b, *3c,* 3d** **and** **3e****.**

In a **step S300,** the tracker device 120 is paired with a wireless device 160, 161. Depending on the embodiments discussed below in relation with Figures 3a, 3b, 3c, 3d and 3e, such wireless device may be the first wireless device 160 or the second wireless device 161. Such wireless device 160, 161 can be considered as a trusted wireless device in that it may be the wireless device of a person allowed to drive the vehicle 100.

Back to Figure 3, in a **step S310,** the tracker device 120 detects its own move, e.g. due to a move of the vehicle 100 the tracker device 120 is implemented in.

In a ***step* S320,** responsive to the detection of the move, the tracker device 120 scans for at least one wireless message sent by the wireless device 160, 161 the tracker device 120 has been paired with.

In a ***step* S330,** if a wireless message is not received by the tracker device 120 before the expiration of a predetermined time duration after the start of the scanning, the tracker device 120 generates an alert information and sends ***(step* S331** in figures 3b, 3d and 3f), to the backend server 150, a wireless message carrying the alert information.

Correspondingly, in step S331, the backend server 150 receives the wireless message, sent by the tracker device 120, carrying the alert information.

Thus, when the wireless device 160, 161 the tracker device 120 has been paired with is not detected while the tracker device 120 is moving, an alert is raised to the backend server 150. The absence of such wireless device 160, 161 while the tracker device is moving can indeed be interpreted as an on-going theft of the vehicle 100 the tracker device 120 is implemented in, e.g. when the wireless device 160, 161 is expected to be carried by the driver of the vehicle 100 in a normal use.

In other embodiments, the step S300 is not implemented. This can be the case e.g. if the tracker device 120 is already paired (or paired by default) with a given wireless device 160, 161. This can also be the case e.g. if the tracker device 120 is not paired at all with a wireless device 160, 161. In those embodiments, the tracker device 120 scans, in step S320, for wireless messages sent by any wireless device 160, 161 within the range of the corresponding means 204 for communicating wirelessly with such wireless device 160, 161. Even if such approach can be considered as less secured, this still allows generating an alert information, in step S330, in case a wireless message (e.g. expected to be sent by a wireless device 160, 161 carried by the driver of the vehicle 100) is not received by the tracker device 120 before the expiration of a predetermined time duration after the start of the scanning. Alternatively, the tracker device 120 may also forward any detected wireless message to the backend server 150. The backend server 150 may then analyze the data in the detected wireless message and raise an alert depending on the nature of the data. For instance, an alert may be raised if the data show that the detected wireless message has been sent by an unexpected wireless device. These data could also be used for forensic analysis.

Referring now to ***Figures 3a*** ***and*** ***3b******, we*** detail some steps of the method for securing the move of the tracker device 120 according to a ***first embodiment.*** This first embodiment relies on the configuration of Figure 1 wherein both the first wireless device 160 (e.g. the smartphone of the owner of the vehicle 100) and the second wireless device 161 (e.g. a wireless beacon tag) are used.

More particularly, in this first embodiment, the step S300 of pairing comprises various sub-steps as follows.

In a ***step S301,*** the first wireless device 160 sends, to the backend server 150, a request for having the tracker device 120 to initiate a discovery procedure. For instance, the step S301 is implemented by the terminal equipment 160 responsive to a user (e.g. the owner of the vehicle 100) having selected or entered a command for such pairing in an interface (e.g. a tactile screen) of the first wireless device 160.

Correspondingly, in step S301, the backend server 150 receives the request, sent by the first wireless device 160, for having the tracker device 120 to initiate a discovery procedure.

Responsive to the receiving the request, in a **step S302** the backend server 150 sends to the tracker device 120, through the communications network 140, a request for initiating the discovery procedure.

Correspondingly, in step S302, the tracker device 120 receives the request, sent by the backend server 150, for initiating the discovery procedure.

Responsive to the receiving the request, in a **step S303** the tracker device 120 scans for an advertisement message sent by a wireless device and receives an advertisement message sent by the second wireless device 161. Such second wireless device 161 may indeed broadcast periodically such advertisement message, e.g. when the second wireless device 161 is a wireless beacon tag. The second wireless device 161 may have been placed close enough to the tracker device 120 by the user (e.g. the owner of the vehicle 100) for achieving such pairing.

In a **step *S304,*** the tracker device 120 sends, to the backend server 150, a message indicative of the detection of the second wireless device 161.

Correspondingly, in step S304, the backend server 150 receives the message, sent by the tracker device 120, indicative of the detection of the second wireless device 161.

In a **step *S305,*** the backend server 150 sends, to the first wireless device 160, a message indicative of the detection of the second wireless device 161 by the tracker device 120.

Correspondingly, in step S305, the first wireless device 160 receives the message, sent by the backend server 150, indicative of the detection of the second wireless device 161 by the tracker device 120.

In a **step *S306,*** the first wireless device 160 sends a request to the backend server 150 for having the tracker device 120 to be paired with the second wireless device 161. For instance, the step S306 is implemented by the first wireless device 160 responsive to the user having selected or entered a command for such pairing in the interface of the first wireless device 160. The user may have selected or entered the command after having read an information displayed on the interface of the first wireless device 160 showing that the tracker device 120 received the advertisement message sent by the second wireless device 161.

Correspondingly, in step S306, the backend server 150 receives the request, sent by the first wireless device 160, for having the tracker device 120 to be paired with the second wireless device 161.

In a **step *S307,*** the backend server 150 sends a request, to the tracker device 120 for pairing with the second wireless device 161.

Correspondingly, in step S307, the tracker device 120 receives the request, sent by the backend server 150, for pairing with the second wireless device 161.

For instance, the advertisement message sent by the second wireless device 161 and received by the tracker device 120 in step S303 may comprise a unique identifier of the second wireless device 161. Responsive to receiving the request, sent by the backend server 150, for pairing with the second wireless device 161 in step S307, the tracker device 120 may store in its embedded memory 201 the unique identifier for further identification of the second wireless device 161. As such, the tracker device 120 is paired with the second wireless device 161.

As discussed above, in the present first embodiment, the second wireless device 161 may broadcast periodically advertisement message, e.g. when the second wireless device 161 is a wireless beacon tag. Accordingly, in step 320 (Figure 3b), the tracker device 120 scans for at least one wireless message sent by the second wireless device 161 the tracker device 120 has been paired with. If a wireless message is not received by the tracker device 120 before the expiration of a predetermined time duration after the start of the scanning, the tracker device 120 generates an alert information and sends, in step S331 (figure 3b), to the backend server 150, a wireless message carrying the alert information.

Correspondingly, in step S331 (figure 3b), the backend server 150 receives the wireless message, sent by the tracker device 120, carrying the alert information.

In **step S332** (figure 3b), the backend server 150 sends, to the first wireless device 160, a corresponding message carrying the alert information.

Correspondingly, in step S332 (figure 3b), the first wireless device 160 receives the wireless message, sent by the backend server 150, carrying the alert information. For instance, a related information may be displayed on a display of the first wireless device 160 for informing the user that a theft of the vehicle 100 wherein the tracker device 120 is implemented may be on-going.

Referring now to **Figures 3c and *3d******,*** we detail some steps of the method for securing the move of the tracker device 120 according to a **second embodiment.** This second embodiment relies on a different configuration than the one of Figure 1. More particularly, no second wireless device 161 is used in this second embodiment. Instead, the first wireless device 160 (e.g. the smartphone of the owner of the vehicle 100) implements both functionalities of the first wireless device 160 and of the second wireless device 161 detailed above.

More particularly, in the present second embodiment, the steps S301, S302, S304, S305, S306, S307, S331 and S332 are the same as in the first embodiment detailed above in relation with Figures 3a and 3b. However, the step S303 differs in the present second embodiment in that this is the first wireless device 160 that sends the advertisement message instead of the second wireless device 161 in the first embodiment. In other words, in the present second embodiment, the first wireless device 160 may also implement the functionalities of a wireless beacon tag. Consequently, in step 320 (Figure 3d), the tracker device 120 scans for at least one wireless message sent by the first wireless device 160 instead of the second wireless device 161.

Referring now to **Figures 3e and *3f******,*** we detail some steps of the method for securing the move of the tracker device 120 according to a **third embodiment.** This third embodiment relies on a same configuration as for the second embodiment described above in relation with Figures 3c and 3d, i.e. no second wireless device 161 is used. However, the functionalities of the first wireless device 160 (e.g. the smartphone of the owner of the vehicle 100) may differ from the ones in said second embodiment. In particular, the first wireless device 160 may be able to respond to a request sent by the tracker device 120, e.g. for establishing a wireless link.

Accordingly, in this third embodiment, the steps S301 and S302 (same steps as in the first and second embodiments described above in relation with Figures 3a, 3b, 3c and 3d) are now optional in that the tracker device 120 is able to initiate the pairing by broadcasting, in **step *S308,*** a discovery message.

Correspondingly, in step S308, the first wireless device 160 receives the discovery message broadcasted by the tracker device 120.

In a **step *S306,*** the first wireless device 160 sends a request to the backend server 150 for having the tracker device 120 to be paired with the first wireless device 160. For instance, the step S306 is implemented by the first wireless device 160 responsive to the user having selected or entered a command for such pairing in the interface of the first wireless device 160. The user may have selected or entered the command after having read an information displayed on the interface of the terminal equipment 160 showing that the first wireless device 160 received the discovery message broadcasted by the tracker device 120 during step S308.

Correspondingly, in step S306, the backend server 150 receives the request, sent by the first wireless device 160, for having the tracker device 120 to be paired with the first wireless device 160.

In a **step *S307,*** the backend server 150 sends a request, to the tracker device 120 for pairing with the first wireless device 160.

Correspondingly, in step S307, the tracker device 120 receives the request, sent by the backend server 150, for pairing with the first wireless device 160. For instance, the request sent by the backend server 150 in step S307 may comprise a unique identifier of the first wireless device 160 that received the broadcasted discovery message for allowing the tracker device 120 to identify the first wireless device 160. For instance, the tracker device 120 may store in the memory 201 the unique identifier for further identification of the first wireless device 160.

In some variants of the present third embodiment, the steps S301 and S302 (as detailed in the first and second embodiments described above in relation with Figures 3a, 3b, 3c and 3d) are also implemented so that the step S308 is executed by the tracker device 120 responsive to the receiving, in step S302, of the request for initiating a discovery procedure.

In some variants of the present third embodiment, responsive to the broadcasting of a discovery message by the tracker device 120 in step S308 and of the corresponding reception of said message by the first wireless device 160, a further direct pairing is established in **step *S303'*** between the first wireless device 160 and the tracker device 120 according to a wireless protocol implemented by the means 204 for communicating wirelessly with the first wireless device 160. For instance, a challenge-response exchange between the tracker device 120 and the first wireless device 160 allows the tracker device 120 to identify the first wireless device 160 as being the wireless device it has been paired with according to such direct pairing. However, in other variants, such direct pairing is not implemented.

As discussed above, in the present third embodiment, the first wireless device 160 may be able to respond to a request sent by the tracker device 120, e.g. for establishing a wireless link. Accordingly, the step 320 of scanning may comprise a step S321 (Figure 3f) wherein the tracker device 120 sends, to the first wireless device 160 the tracker device 120 has been paired with, an advertisement message for having the first wireless device 160 to send back a wireless message to the tracker device 120. Responsive to the execution of the step S321, the tracker device scans for a wireless message to be sent back by the first wireless device 160.

In case a wireless message is not received by the tracker device 120 before the expiration of a predetermined time duration after the start of the scanning, the tracker device 120 generates an alert information and sends, to the backend server 150, a wireless message carrying the alert information. Correspondingly, the backend server 150 sends, to the first wireless device 160, a corresponding message carrying the alert information (same steps S330, S331 and S332 as discussed above).

Alternatively, in case a direct pairing has been implemented between the first wireless device 160 and the tracker device 120 (step S303' above), in step S321 (Figure 3f), the tracker device 120 may also open a wireless connection with the first wireless device 160 and do a challenge-response exchange to authenticate the first wireless device 160. In case the challenge-response exchange fails, the tracker device 120 generates an alert information and sends, to the backend server 150, a wireless message carrying the alert information. Correspondingly, the backend server 150 sends, to the first wireless device 160, a corresponding message carrying the alert information (same steps S330, S331 and S332 as discussed above).

## Claims

1. Tracker device (120) for accessing data sent by a dongle (110) connected to a vehicle (100),
**characterized in that** it is battery (205) powered and comprises means (204) for communicating wirelessly with:
- at least one dongle (110) connected to a corresponding vehicle (100);
- a backend server (150) through a communications network (140); and
- at least one wireless device (160, 161),
and **in that** it comprises means (206) for detecting a move of the tracker device.

2. Tracker device according to claim 1, wherein said means for communicating wirelessly comprise a short-range communications transceiver for communicating with said at least one wireless device.

3. Tracker device according to claim 1 or 2, wherein said means for communicating wirelessly comprise a long-range communications transceiver for communicating with said backend server.

4. Tracker device according to any of the claims 1 to 3, wherein said means for detecting a move of the tracker device comprise an accelerometer or a Global Navigation Satellite System receiver.

5. Tracker device according to any of the claims 1 to 4 implemented in a vehicle, said means for communicating wirelessly being configured for communicating with a dongle connected to said vehicle.

6. Tracker device according to claim 5 wherein said tracker device is not electrically wired connected to said vehicle.

7. Vehicle comprising a tracker device according to any of the claims 1 to 4, wherein said tracker device is not electrically wired connected to said vehicle.

8. Method for securing the move of a tracker device (120) according to any of the claims 1 to 6, **characterized in that** the tracker device executes:
- detecting (S310) a move of the tracker device;
- responsive to said detecting a move, scanning (S320) for at least one wireless message sent by a wireless device (160, 161); and
- if a wireless message is not received before the expiration of a predetermined time duration after the start of said scanning, generating (S330) an alert information and sending (S331), to said backend server, a wireless message carrying said alert information.

9. Method according to claim 8, wherein the tracker device executes pairing (S300) with a wireless device (160, 161),
wherein, during said scanning (S320) responsive to said detecting a move, the tracker device scans for at least one wireless message sent by the wireless device it has been paired with, and wherein if a wireless message sent by the wireless device the tracker device has been paired with is not received before the expiration of a predetermined time duration after the start of said scanning, the tracker device executes said sending (S330), to said backend server, a wireless message carrying an alert information.

10. Method according to claim 9, wherein the pairing comprises:
- receiving (S302) a request, sent by the backend server, for initiating a discovery procedure;
- responsive to the receiving the request, scanning (S303) for an advertisement message sent by the wireless device (160, 161) and receiving an advertisement message sent by the wireless device (160, 161);
- sending (S304), to the backend server, a message indicative of the detection of the wireless device;
- receiving (S307) a request, sent by the backend server, for pairing with the wireless device.

11. Method according to claim 9, wherein the pairing comprises:
- broadcasting (S308) a discovery message in destination to said at least one wireless device (160);
- receiving (S307) a request, sent by the backend server, for pairing with a wireless device (160) that received the broadcasted discovery message.

12. Method according to claim 11, wherein the pairing comprises:
- receiving (S302) a request, sent by the backend server, for initiating a discovery procedure;
and wherein the broadcasting (S308) a discovery message is executed responsive to the receiving the request for initiating a discovery procedure.

13. Method according to claim 11 or 12, wherein the pairing comprises:
- responsive to the broadcasting a discovery message, establishing (S303') a direct pairing with the wireless device that received the broadcasted discovery message according to a wireless protocol implemented by the means for communicating wirelessly with the wireless device.

14. Method according to any of the claims 11 to 13, wherein the request for pairing sent by the backend server comprises a unique identifier of the wireless device that received the broadcasted discovery message for allowing the tracker device to identify the wireless device.

15. Method according to any of the claims 11 to 14, wherein the scanning (S320) for a wireless message comprises:
- sending (S321), to the wireless device the tracker device has been paired with, an advertisement message for having said wireless device to send back a wireless message to the tracker device.
